## Europäisches Patentamt
## European Patent Office
## Office européen des brevets

(11) Numéro de publication: **0 354 087**
**A1**

(12)
# DEMANDE DE BREVET EUROPEEN

(21) Numéro de dépôt: 89402059.3

(22) Date de dépôt: 19.07.89

(51) Int. Cl.5: **G 05 D 16/20**
**F 15 B 13/042**

(30) Priorité: 03.08.88 FR 8810506

(43) Date de publication de la demande:
07.02.90 Bulletin 90/06

(84) Etats contractants désignés:
AT BE CH DE ES FR GB GR IT LI LU NL SE

(71) Demandeur: **BENNES MARREL**
**Zone Industrielle Sud - BP 56**
**F-42161 Andrézieux-Bouthéon Cédex (FR)**

(72) Inventeur: **Lambert, Bernard**
**Les Charmes**
**F-71960 Chevagny-les-Chevrieres (FR)**

**Rousset, André**
**Le Levant 8 rue de 19 mars 1962**
**F-42270 Saint-Priest-en-Jarez (FR)**

(74) Mandataire: **Rinuy, Santarelli**
**14, avenue de la Grande Armée**
**F-75017 Paris (FR)**

(54) Composant électro-hydraulique de régulation de pression.

(57) Composant électro-hydraulique de régulation de pression comportant au moins une valve de réduction de pression muni d'un organe mobile de valve, un dispositif mécanique (4) pour la manoeuvre de cet organe mobile de valve, et un organe électrique de commande (M), caractérisé en ce que l'organe mobile de valve (3) est un tiroir coulissant soumis d'une part à une pression de service régnant dans une chambre de pression et à une force opposée appliquée au moins indirectement par une barre de manoeuvre (24) formant crémaillère engrénant avec un pignon (27) entraîné par un moteur électrique de type rotatif.

FIG.1

EP 0 354 087 A1

**Description**

## Composant électro-hydraulique de régulation de pression

L'invention concerne un ensemble intégrant une valve hydraulique de réduction de pression et un dispositif pour la manoeuvre de cette valve.

Un tel ensemble est notamment mis en oeuvre pour la commande progressive d'un organe de puissance hydraulique, tel qu'un distributeur de puissance.

En pratique, il est souvent nécessaire de pouvoir commander en position l'organe mobile de cette valve à partir d'un poste de commande situé à distance ; il est connu, dans de tels cas, de faire intervenir des signaux électriques de commande aboutissant à un interface électromécanique associé au dispositif de manoeuvre de la valve.

Une telle commande électrique est notamment recommandée dans des systèmes mécaniques à commande hydraulique tels que des pelles hydrauliques, des grues, des équipements pour des véhicules ou engins de travaux publics, et autres applications industrielles.

En fait, les interfaces électromécaniques utilisées à ce jour pour la commande en position de l'organe mobile de la valve sont assez complexes et coûteux, compte tenu du degré de précision et de fiabilité souhaité ; ils font toujours intervenir des solénoïdes appliquant un effort sur le tiroir de valve proportionnels et font intervenir donc des phénomènes électromagnétiques.

L'invention vise à pallier les inconvénients précités en simplifiant la conception globale et en réduisant le coût d'un ensemble intégrant un interface électromécanique et au moins une valve hydraulique de réduction de pression.

Elle vise, à titre subsidiaire, à pallier un autre problème technique non suffisamment bien résolu à ce jour, à savoir la commande électrique, dans un faible encombrement, de deux valves de réduction de pression hydraulique, pour la commande notamment d'un distributeur hydraulique à double effet (mouvement dans les deux sens ou l'absence de rappel élastique).

L'invention propose ainsi, de façon générale, un composant électro-hydraulique de régulation de pression comportant au moins une valve de réduction de pression muni d'un organe mobile de valve, un dispositif mécanique pour la manoeuvre de cet organe mobile de valve, et un organe électrique de commande, caractérisé en ce que l'organe mobile de valve est un tiroir coulissant soumis d'une part à une pression de service régnant dans une chambre de pression et à une force opposée appliquée au moins indirectement par une barre de manoeuvre formant crémaillère engrenant avec un pignon entraîné par un moteur électrique de type rotatif.

De manière préférée, pour résoudre le problème subsidiaire énoncé ci-dessus le composant comporte deux valves de réduction de pression dont les tiroirs sont disposés longitudinalement de part et d'autre de la barre de manoeuvre qui est unique.

Ainsi, grâce à un seul composant électro-hydraulique il est possible de commander un distributeur de puissance double effet.

Selon d'autres disposition préférées :

- il comporte un jeu de deux disques comprimant un ressort, ce jeu étant interposé longitudinalement entre la barre de manoeuvre et un épaulement du tiroir.

- le jeu de disques est disposé dans un logement présentant un épaulement formant butée pour ce jeu de disques en direction du tiroir.

- le tiroir présente sur une tige une portion intermediaire de plus grande section que cette tige, cette tige se prolongeant au travers des disques pour lesquels elle constitue un guide en translation.

- la tige se prolonge jusque dans la barre de manoeuvre, laquelle est tubulaire.

Des objets, caractéristiques et avantages de l'invention ressortent de la description qui suit, donnée à titre d'exemple non limitatif, en regard des dessins annexés sur lesquels :

- la figure 1 est une vue en coupe axiale d'un composant électro-hydraulique selon l'invention, à deux valves de réduction de pression, en configuration neutre de repos ;

- la figure 2 en est une vue similaire en configuration de service avant que l'équilibre de la valve ne se rétablisse ; et,

- la figure 3 est un exemple de circuit intégrant ce composant électro-hydraulique.

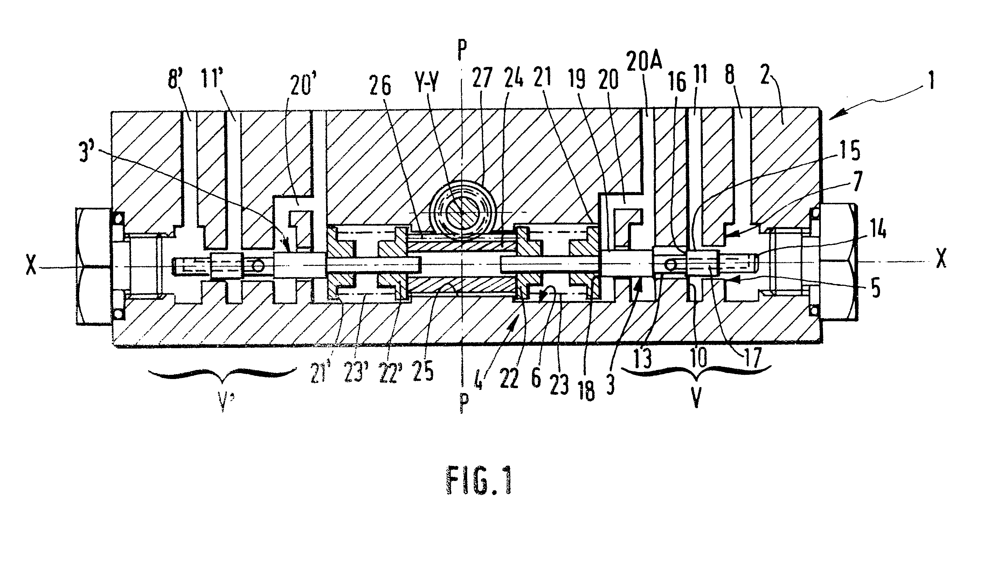

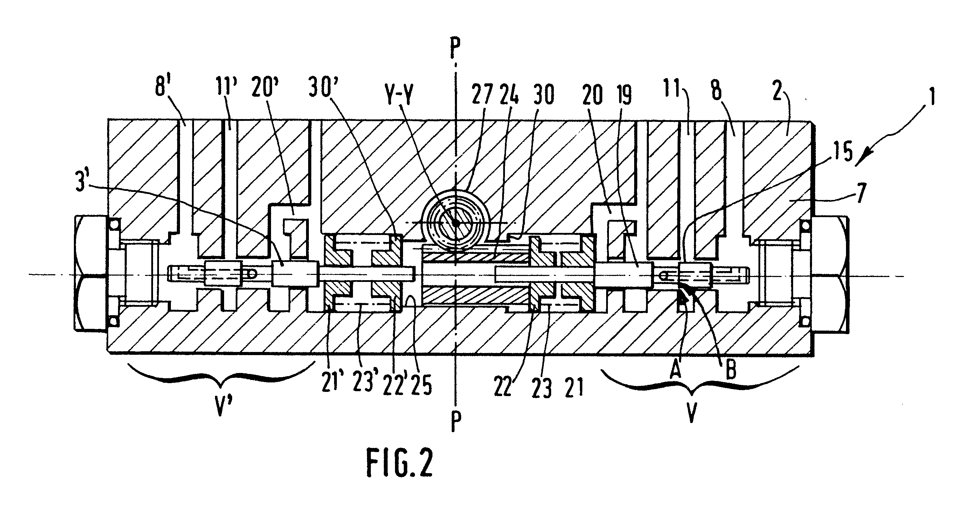

Les figures 1 et 2 représentent un composant électro-hydraulique de régulation de pression 1 comportant dans un corps 2 au moins une valve de réduction de pression V comportant un tiroir 3 de régulation de pression dans le prolongement duquel est monté un dispositif mécanique de manoeuvre 4.

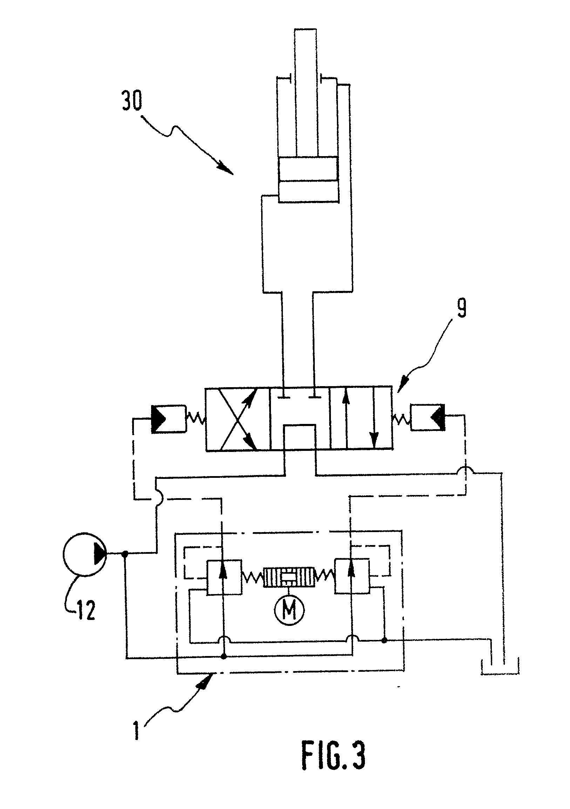

Dans ce corps 2 est ménagé un alésage 5 d'axe longitudinal X-X dans lequel coulisse le tiroir 3 et qui, à une extrémité, se prolonge par un logement 6 dans lequel est disposé au moins en partie le dispositif mécanique 4 et, à son extrémité opposée, communique avec une chambre de pression 7 dans laquelle débouche un conduit de sortie 8 destiné à être connecté hydrauliquement à un récepteur repéré 9 à la figure 3.

En une portion intermédiaire de cet alésage 5 est prévue une chambre d'alimentation 10 dans laquelle débouche un conduit d'alimentation 11 destiné à être connecté à une source de pression repérée 12 à la figure 3.

Cette chambre d'alimentation 10 se raccorde géométriquement à l'alésage 5, du côté du dispositif mécanique 4, par une arête A bordant l'alésage et qui, ici, forme une ligne fermée sur elle-même.

Le tiroir 3 comporte une tige allongée 13 dont une extrémité 14 pénètre dans la chambre de pression 7 et qui comporte une portion intermediaire 15 de plus grande section, constante, adaptée à coulisser par sa paroi externe de façon étanche dans la portion de l'alésage située entre les chambres 7 et 10 et qui se prolonge dans la chambre d'alimentation en présentant un flanc 16 orienté vers le dispositif mécanique 4 auquel la paroi externe de cette portion 15 se raccorde par une arête B (voir figure 2), ici formée d'une ligne fermée sur elle-même identique à celle de l'arête A.

Il existe donc une position longitudinale du tiroir 3 dans laquelle la portion intermédiaire 15 isole la chambre d'alimentation 10 du reste de l'alésage tandis que ces arêtes A et B sont juste en contact dans un plan transversale. Cette position est appelée position neutre.

Un canal d'équilibrage 17 est prévu dans le tiroir, qui débouche de part et d'autre de la portion intermédiaire 15.

La tige allongée 13 du tiroir 3 comporte en outre, à l'opposé de son extrémité 14, une butée transversale 18, ici constituée par un épaulement annulaire reliant cette tige, qui se prolonge ici jusque dans le logement 6 du dispositif mécanique 4 à une seconde portion intermédiaire 19 adaptée à coulisser sans jeu dans l'alésage 5.

Le corps 2 présente en outre, à proximité du logement 6 de ce dispositif mécanique, une chambre de fuite 20 dans laquelle débouche un canal de fuite 20A et que cette seconde portion intermédiaire 19 est destinée à isoler hydrauliquement du reste de l'alésage 5. Ces canaux visent à drainer les fuites intervenant entre le corps 2 et le tiroir 3.

Le dispositif de manoeuvre 4 comporte un premier disque de butée 21 adapté à être axialement affronté à la butée transversale 18 et un second disque de butée 22, qu'un ressort 23 de raideur K tend à écarter axialement du premier disque 21. Ces deux disques peuvent coulisser axialement dans le logement 6. Ils comportent ici un perçage axial traversé par la tige 13 du tiroir qui leur sert donc de guide.

Une barre de manoeuvre 24, ici indépendante du second disque, est adaptée à coulisser axialement dans un alésage 25 du corps 6 et appliquer à ce second disque une poussée vers le premier disque. Cette barre est ici tubulaire en sorte de pouvoir recevoir librement l'extrémité gauche de la tige 13.

Cette barre présente alors une génératrice, une série longitudinale de dents formant crémaillère 26 adaptée à engrener avec un pignon 27 entraîné par un moteur électrique pas à pas désigné par M à la figure 3 et dont l'axe de rotation Y-Y est perpendiculaire à l'axe X-X.

Dans la configuration des figures 1 et 2, le composant électro-hydraulique 1 est symétrique par rapport à un plan transversal P-P contenant l'axe de rotation Y-Y du pignon 27, et les éléments de sa portion gauche sont similaires à ceux de la partie droite déjà décrite en détail, et sont repérés par des signes de référence affectés d'un indice "prime".

L'alésage 25 dans lequel coulisse la barre crénelée de manoeuvre 24 est raccordé aux logements 6 et 6' par des épaulements 30 et 30' formant butée pour les seconds disques 22 et 22'.

Dans le cas où un seul tiroir est mis en oeuvre, le composant des figures 1 et 2 peut être simplifié avec suppression d'une partie du composant située à gauche du logement 25 recevant la barre de manoeuvre et de la remplacer par une bride d'obturation de ce logement. Dans ce cas, comme on le verra plus loin, le second disque de butée peut être solidaire de la barre de manoeuvre.

Dans la configuration neutre de la ligne 1 le moteur électrique M ne reçoit pas d'ordre électrique: l'ensemble pignon/barre crénelée, positionné par les disques de butée 22 et 22' et les ressorts 23 et 23' (complètement détendus), est en position centrale tandis que les tiroirs 3 et 3' sont en leur position neutre d'équilibre dans laquelle les arêtes A et B sont juste en regard radialement : il n'y a pas d'écoulement entre les conduits 11 et 8.

Il y a pour chaque tiroir équilibre entre les forces appliquées d'une part par le ressort associé et, d'autre part, la pression de la chambre de pression associée.

Dans cette position, les circuits hydrauliques récepteurs ne sont pas alimentés en pression, mais reliés au réservoir.

En présence d'un ordre électrique appliqué au moteur pas à pas M, celui-ci s'indexe en rotation ce qui implique une translation proportionnelle (vers la droite à la figure 2) de la barre de manoeuvre 25 et de l'un des seconds disques de butée 22, ce qui comprime le ressort 23 sur une distance $x$ d'où une force axiale complémentaire K.x appliquée au premier disque 21 et au tiroir 3. Cette force provoque un déplacement vers la droite du tiroir avec décalage des arêtes A et B, d'où écoulement de fluide au travers du canal d'équilibrage 17 vers la chambre de pression 7 dont la pression croît jusqu'à compenser la force appliquée par le ressort : le tiroir revient en position neutre.

On a ainsi réalisé un système qui permet d'obtenir une pression hydraulique proportionnelle à un ordre électrique.

Le circuit récepteur relié au conduit 8 est alimenté sur 1/2 tour du moteur électrique pas à pas. La commande du circuit récepteur associé à l'autre conduit 8' se fait de façon identique sur l'autre 1/2 tour du moteur électrique pas à pas.

On appréciera que la commande par moteur électrique pas à pas présente les avantages suivants :
- un moteur de commande par rotation de 1/2 tour deux valves de réduction de pression hydraulique ;
- le moteur électrique pas à pas s'indexe sur un même pas pour un ordre donné : pas d'hystérésis ;
- le nombre important de pas permet une grande précision sur la sortie pression récepteur.

De façon générale ont peut, selon l'invention, remplacer ce moteur pas à pas par tout autre moteur électrique rotatif connu, tel que par exemple un moteurcouple.

Dans l'exemple d'application de la figure 3 le composant 1 sert à commander la position du distributeur de puissance 9 à double effet associé à un verin double effet 30. Le choix de sa position de travail dépend de celle des valves V ou V' qui est en service. Il est à noter que le fluide d'alimentation distribué par le distributeur 9 est fourni par la source de pression 12 connectée au composant.

Il va de soi que la description qui précède n'a été proposée qu'à titre d'exemple non limitatif et que de nombreuses variantes peuvent être proposees par l'homme de l'art sans sortir du cadre de l'invention.

En résumé, l'invention propose un composant qui est un interface électro-hydraulique permettant de commander, par l'intermédiaire d'une commande à distance électrique, un distributeur de puissance. Il trouve donc son utilisation sur toutes les installations hydrauliques et, en particulier, chaque fois que le distributeur de puissance est éloigné du poste de commande.

## Revendications

1. Composant électro-hydraulique de régulation de pression comportant au moins une valve de reduction de pression muni d'un organe mobile de valve, un dispositif mécanique (4) pour la manoeuvre de cet organe mobile de valve, et un organe électrique de commande (M), caractérisé en ce que l'organe mobile de valve (3) est un tiroir coulissant soumis d'une part à une pression de service régnant dans une chambre de pression et à une force opposée appliquée au moins indirectement par une barre de manoeuvre (24) formant crémaillère engrénant avec un pignon (27) entraîné par un moteur électrique de type rotatif.

2. Composant selon la revendication 1, caractérisé en ce qu'il comporte deux valves de réduction de pression (V, V') dont les tiroirs (3, 3') sont disposés longitudinalement de part et d'autre de la barre de manoeuvre qui est unique.

3. Composant selon la revendication 1 ou la revendication 2, caractérisé en ce qu'il comporte un jeu de deux disques (21, 22 ; 21', 22') comprimant un ressort (23, 23') ce jeu étant interposé longitudinalement entre la barre de manoeuvre et un épaulement (18) du tiroir (3, 3').

4. Composant selon la revendication 3, caractérisé en ce que le jeu de disques est disposé dans un logement (6) présentant un épaulement (30) formant butée pour ce jeu de disques en direction du tiroir.

5. Composant selon la revendication 3 ou la revendication 4, caractérisé en ce que le tiroir (3, 3') présente sur une tige (13) une portion intermédiaire (19) de plus grande section que cette tige, cette tige se prolongeant au travers des disques pour lesquels elle constitue un guide en translation.

6. Composant selon la revendication 5, caractérisé en ce que la tige se prolonge jusque dans la barre de manoeuvre, laquelle est tubulaire.

FIG. 1

FIG.2

EP 0 354 087 A1

FIG. 3

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0038128 (GENERAL SIGNAL CORPORATION) <br> * page 3, ligne 31 - page 6, ligne 3; figures 1, 2 * | 1, 2 | G05D16/20 <br> F15B13/042 |
| Y | US-A-4436280 (B. GEISOW) <br> * colonne 6, ligne 52 - colonne 7, ligne 13; figures 1, 3 * | 1 | |
| Y | DE-A-2435685 (SANDERS ASSOCIATES INC.) <br> * page 8, ligne 6 - page 9, ligne 24; figure 1 * | 2 | |
| A | FR-A-1383319 (ATELIERS HEUZE, MALEVEZ & SIMON REUNIS SA) <br> * page 2, colonne de gauche, ligne 11 - colonne de droite, ligne 25; figures 1, 2 * | 2 | |
| A | DE-A-1550322 (E. HERION) <br> * page 11; revendication 6; figure 1 * | 3 | |
| A | US-A-3784156 (H. PAETZEL ET AL) <br> * colonne 3, lignes 9 - 30; figure 1 * | 3 | DOMAINES TECHNIQUES RECHERCHES (Int. Cl.5) <br><br> G05D <br> F15B <br> F16K |

Le présent rapport a été établi pour toutes les revendications

| Lieu de la recherche | Date d'achèvement de la recherche | Examinateur |
|---|---|---|
| LA HAYE | 30 AOUT 1989 | HELOT H.V. |

EPO FORM 1503 03.82 (P0402)